# EUROPÄISCHE PATENTSCHRIFT

(11) **EP 1 722 116 B1**
(45) Veröffentlichungstag und Bekanntmachung des Hinweises auf die Patenterteilung: **07.07.2010**
(21) Anmeldenummer: 05010174.0
(22) Anmeldetag: 11.05.2005
(51) Int. Cl.: F16C 33/10, F16C 32/06

(54) **Gleitlager**
Sliding bearing
Palier lisse

(43) Veröffentlichungstag der Anmeldung: 15.11.2006
(73) Patentinhaber: Carl Freudenberg KG, 69469 Weinheim (DE)
(72) Erfinder: Bock, Eberhard, 69509 Mörlenbach (DE); Gramlich, Martin, 69493 Leutershausen/Hirschberg (DE)

(56) Entgegenhaltungen:
- EP-A- 0 064 598
- DE-A1- 2 025 636
- DE-A1- 10 030 698
- DE-B- 1 284 696

## Beschreibung

### Technisches Gebiet

Die Erfindung betrifft ein Gleitlager zur Lagerung einer Welle gemäß dem Oberbegriff des Patentanspruchs 1.

### Stand der Technik

Aus der DE 2 025 636 A1 ist ein hydrostatisches Lager zur Lagerung einer Welle bekannt, welches eine radial bewegliche Lagerschale aufweist.

Derartige Gleitlager sind allgemein bekannt. Ein Gleitlager der genannten Art umfasst in der Regel einen Lagerstuhl, welcher auf der der Kurbelwelle zugewandten Seite mit einer Lagerschale versehen ist. Die Lagerschaleninnenseite und die Kurbelwellenoberfläche begrenzen einen Lagerspalt, welcher im Betrieb von Schmiermittel durchflossen wird. Die Zufuhr des Schmiermittels erfolgt in der Regel durch eine zentral angeordnete Nut in der Lagerschale.

Die Wellen von Verbrennungsmotoren von Kraftfahrzeugen sind in der Regel in solchen Gleitlagern gelagert. Zur optimalen Schmierung werden die Gleitlager meist mittels einer Ölpumpe durch eine der Lagerschalen hindurch mit Öl versorgt, das mit einem gewissen Druck in die Lager gepresst wird. Öldruck ist erforderlich, um die Lager ausreichend mit Öl zu versorgen, da das Öl in konstruktiv notwendige Spalte abfließt. Ein großer radialer Spalt führt zu unerwünscht großem Ölabfluss und damit zu gefährlichem Druckabfall im Lager. Durch den Druckabfall kann der Schmierfilm zusammenbrechen, was in einem schnelleren Verschleiß der beweglichen Elemente resultiert, Es ist daher für einen sicheren Betrieb ein ausreichend hoher Öldruck im Lager notwendig. Im Betrieb vergrößern sich Spalte im Lager beispielsweise aufgrund von Erwärmung- Um den Öldruck im Lager konstant zu halten, ist der Einsatz von Pumpen mit erhöhter Pumpleistung möglich. Solche Probleme treten insbesondere bei modernen Motoren mit Leichtmetallgehäusen auf, bei denen Bauteile mit unterschiedlichen Wärmeausdehnungskoeffizienten in Wechselwirkung treten.

Im Stand der Technik wird der Einsatz von Gussbetten/-lager in Leichtmetallkurbelgehäusen zur Aufnahme der Lagerschalen beschrieben. Hierdurch soll die unterschiedliche radiale Aufweitung und damit der Spaltentstehungsprozess zwischen verschiedenen Bauteilen, der zu erhöhtem Schmiermittelabfluss führen kann, vermindert werden. Diese Lösungen gehen jedoch zu Lasten des Motorgewichts und der Herstellungskosten.

Weiterhin ist aus der DE 198 18 120 ist eine Kurbelwellengleitlagerung bekannt, bei welcher zwischen der Lagerschale und dem Lagerstuhl eine Kompensationseinrichtung vorgesehen ist, deren Wärmeausdehnung größer ist als die des Lagerstuhls. Auch mit dieser Kompensationseinrichtung soll der temperaturabhängigen Aufweitung des Lagerspaltes und damit dem erhöhten Schmiermittelabfluss entgegengewirkt werden.

### Darstellung der Erfindung

Der Erfindung liegt die Aufgabe zugrunde, ein weiteres Gleitlager der eingangs beschriebenen Art bereitzustellen, bei welchem negative Auswirkungen einer temperaturbedingten Änderung des Lagerspalts sicher vermieden werden können.

Die vorliegende Erfindung löst die zuvor genannte Aufgabe durch die Merkmale des Patentanspruchs 1.

Das erfindungsgemäße Gleitlager zur Lagerung einer Welle, welches wenigstens eine Lagerschale zur Aufnahme der Welle umfasst, wobei die Lagerschale und die Oberfläche der Welle einen Lagerspalt definieren, sowie Mittel zum Zuführen eines Schmiermittels in den Lagerspalt, welches aus dem Lagerspalt wieder abführbar ist, weist wenigstens ein Drosselelement zur Drosselung des Schmiermittelstroms durch den Lagerspalt auf. Die Drosselelemente umfassen Absperrelemente, die durch Federelemente und/oder ein unter Druck stehendes Fluid an die Welle anlegbar sind.

Das erfindungsgemäße Gleitlager hat den Vorteil, dass durch eine relativ einfache Maßnahme ein geregelter Durchfluss des Schmiermittelstroms durch den Lagerspalt erzielt wird. Insbesondere können ein zu starker Abfluss des Schmiermittels, beispielsweise bei einer temperaturbedingten Aufweitung des Lagerspaltes, und damit ein gefährlicher Druckabfall im Lager sicher vermieden werden. Durch die Drosselung des Schmiermittelstroms kann dieser über einen weiten Temperaturbereich konstant gehalten werden. Insoweit ist durch diese Ausgestaltung in vorteilhafter Weise realisiert, dass auf den Einsatz von Pumpen, welche den Schmiermitteldruck in aufwendiger Weise an die Dimensionen des Spalts anpassen müssen, verzichtet werden kann und somit kleine und kostengünstige Konstantpumpen eingesetzt werden können.

Die Drosselelemente umfassen Absperrelemente, die durch Federelemente und/oder ein unter Druck stehendes Fluid an die Kurbelwelle anlegbar bzw. in einem definierten Abstand zur Kurbelwelle festlegbar sind. Durch diese Maßnahme ist gewährleistet, dass der Durchflussquerschnitt für das Schmiermittel auch bei veränderlicher Lagerspalthöhe weitgehend konstant gehalten wird. Als Folge hiervon kann der Schrniermitteldurchfluss über einen weiten Temperaturbereich konstant gehalten werden.

Auch wenn im Folgenden die Drosselelemente immer im Plural genannt werden, soll die vorliegende Erfindung selbstverständlich auch den Einsatz eines einzigen Drosselelementes mit einbeziehen. Weiterhin wird im Folgenden die Erfindung ohne Beschränkung der Allgemeinheit anhand ihres bevorzugten Einsatzes in der Kraftfahrzeugtechnik zur Lagerung von Kurbelwellen beschrieben.

Vorteilhafterweise sind die Drosselelemente direkt im Lagerspalt, dass heißt, im Bereich der der Kurbelwelle zugewandten Seite und/oder der Stirnseiten der Lagerschale, angeordnet.

In einer konstruktiv einfachen Lösung sind die Drosselelemente in und/oder an der Lagerschale angeordnet Diese Ausgestaltung ermöglicht eine besonders kompakte Bauweise des Gleitlagers.

Die vorliegende Erfindung ist jedoch nicht auf die oben beschriebenen Absperrelemente beschränkt. Denkbar ist auch die Ausbildung der Drosselelemente als Ringscheiben, die am Außenumfang der Lagerschale axial angeordnet und mit Drosselöffnungen zum Durchtritt des Schmiermittels versehen sind.

Weiterhin können die Drosselelemente Dichtlippen umfassen, die vorzugsweise am Außenumfang der Lagerschale angeordnet sind und unter elastischer Vorspannung dichtend an der Kurbelwelle anliegen. Durch Ausrichtung der Dichtlippe in Richtung des Schmiermittelflusses kann in einfacher Weise ein Abbau eines Schmiermittelüberdrucks realisiert werden. Bei zunehmendem Schmiermitteldruck hebt die Dichtlippe ab, das überschüssige Schmiermittel kann entweichen. Bei Ausrichtung der Dichtlippe in die entgegengesetzte Richtung kann der Schmiermittelstrom in einfacher Weise in die Unterschale des Lagers umgelenkt werden und es wird außerdem eine stärkere Drosselwirkung erzeugt.

Die nachfolgenden Ausführungen beziehen sich auf die Ausbildung der Drossefelemente als Absperrelemente.

Im Hinblick auf ein besonders symmetrisches Kompensieren eines Spaltentstehungsprozesses könnten wenigstens zwei Absperrelemente in und/oder an der Lagerschale auf der der Kurbelwelle zugewandten Seite beiderseits der Nut zum Zuführen des Schmiermittelstroms angeordnet sein.

Eine konstruktiv bevorzugte Lösung sieht vor, dass die Absperrelemente in radialen Nuten auf der der Kurbelwelle zugewandten Seite der Lagerschale angeordnet sind. Vorteilhafterweise sind die Absperrelement in diesen Nuten radial und axial beweglich, so dass eine Anfederung der Absperrelemente sowohl an die Kurbelwelle als auch, falls gewünscht, an eine der Innenwände der Aufnahmenut mit mechanischen Mitteln bzw. ein Anpressen an die Kurbelwelle und/oder Innenwände durch auf die Rückseite und/oder seitliche Begrenzung der Absperrelemente einwirkenden Fluiddruck erfolgen kann. In Ergänzung zu der Anpressung der Absperrelemente durch den Fluiddruck kann auch eine zusätzliche Anfederung durch mechanische Federelemente vorgesehen sein. Diese Ausgestaltung hat den Vorteil, dass der Anpressdruck unabhängig vom Fluiddruck ist.

In einer besonders bevorzugten Ausführungsform der Erfindung wird als Fluid zur Anpressung der Absperrelemente an die Kurbelwelle und/oder eine der Innenwände der Aufnahmenut das Schmiermittel selbst verwendet. Dies lässt sich in einfacher Weise dadurch realisieren, dass eine Verbindung zwischen der zentralen Schmiermittelversorgung und den Aufnahmenuten für die - Absperrelemente hergestellt wird. Vorteilhafterweise sind die Absperrelemente und die Aufnahmenuten so dimensioniert, dass aus Zwischenräumen Schmiermittel in den Lagerspalt austreten kann. Dies sorgt für eine zusätzliche Schmierung des Lagers.

Je nach Formgebung können die Absperrelemente bei der oben beschriebenen Ausführungsform mit weiteren Zusatzfunktionen versehen werden. So können die Absperrelemente beispielsweise so ausgebildet werden, dass eine Lenkung des Schmiermittelstroms zur Lagermitte hin erfolgt. Hierzu wären beispielsweise eine Dreieck- oder eine L-Form der Absperrelement geeignet. Die Absperrelemente und die Aufnahmenuten können hierbei so dimensioniert werden, dass der austretende Schmiermittelstrom alleine zur Schmierung des Lagers ausreicht. Bei diesen Ausführungsformen kann beispielsweise auf die zentrale Nut zur Schmiermittelversorgung verzichtet werden.

Die erfindungsgemäßen Drosselelemente könnten aus einem Polymer gefertigt sein, um eine besonders kostengünstige Herstellung des Gleitlagers zu gewährleisten.

Denkbar ist auch, die Drosselelemente aus einem Elastomer zu fertigen, wodurch eine besonders gute Anpassungsfähigkeit der Absperrelement an vorgefertigte Ausnehmungen gewährleistet ist.

Die Drosselelemente könnten auch aus einem Polytretrafluorethylen-Compound gefertigt sein. Dieses Material zeichnet sich durch eine besonders geringe Reibung und hohe Abriebfestigkeit aus.

Die Drosselelemente können weiterhin aus einem thermoplastischen Werkstoff gefertigt sein.

Das erfindungsgemäße Gleitlager findet vorzugsweise Anwendung in Kraftfahrzeugen. Bei dieser Anwendung ist generell ist die Ausstattung nur des oberen Lagerteils mit erfindungsgemäßen Drosselelementen vorzuziehen, da das Lagerunterteil durch die im Motor oben angeordneten Zylinder wesentlich höher belastet ist als das Lageroberteil,

Das erfindungsgemäße Gleitlager ist jedoch keinesfalls auf die oben beschriebene Anwendung beschränkt.

Es gibt nun verschiedene Möglichkeiten, die Lehre der vorliegenden Erfindung auf vorteilhafte Weise auszugestalten und weiterzubilden. Dazu ist einerseits auf die dem Patentanspruch 1 nachgeordneten Ansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert.

### Kurzbeschreibung der Zeichnung

In der Zeichnung zeigen
- Fig. 1: in einer Halbschnittzeichnung ein Gleitlager mit einer Welle und einem Lagerstuhl sowie einer Lagerschale, wobei beiderseits der Nut zur Schmiermittelversorgung in der Lagerschale Drosselelemente, die mit Schmiermitteldruck beaufschlagbar sind, eingebracht sind,
- Fig. 2: ein Gleitlager, bei dem zwischen Lagerschale und Kurbelwange ein Drosselelement in Form einer Dichtlippe vorgesehen ist,
- Fig. 3: in einer weiteren Ausführungsform der Erfindung ein Gleitlager, bei dem zwischen Lagerschale und Kurbelwange ein Drvssetelement in Form einer Dichtlippe vorgesehen ist,
- Fig. 4: ein Gleitlager, bei welchem das Drosselelement als kreisringförmige Scheibe mit Drosselbohrungen ausgebildet ist.
- Fig. 5: ein Gleitlager analog zu Figur 1, bei welchem die Absperrelemente mechanisch angefedert sind.
- Fig. 6: ein Gleitlager analog zu Figur 1, bei welchem die Absperrelemente zur Lenkung des Schmiermittels troms zur Mitte hin und damit sie durch den Schmiermitteldruck axial nach außen gedrückt werden im Querschnitt eine dreieckförmige Gestalt aufweisen.
- Fig. 7: ein Gleitlager analog zu Figur 6, bei welchem die Absperrelemente mit L-förmiger Gestalt ausgebildet sind.

### Ausführung der Erfindung

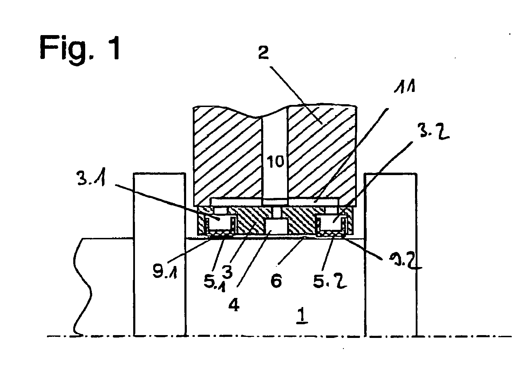

Fig. 1 zeigt eine Kurbelwelle 1 im Halbschnitt, die in einem Gleitlager 2 über die Lagerschalen 3 gelagert ist. Die Schmiermittelversorgung des Lagers erfolgt durch die Ölversorgung 10 über die Nut 4 in der Lagerschale 3. Links und rechts in der oberen Lagerschale 3 sind weitere Nuten 3.1, 3.2 eingebracht, die über einem Verbindungskanal 11 ebenfalls mit der Schmiermittelversorgung verbunden sind. In diesen Nuten 3.1, 3.2 befinden sich Absperrelemente 5.1, 5.2, die durch den anstehenden Schmiermitteldruck an die Kurbelwelle 1 angepresst sind und dadurch den Lagerspalt 6 nach außen hin abschließen. Wächst der Lagerspalt 6 durch die unterschiedlich großen Wärmeausdehnungskoeffizienten von Kurbelwelle 1 und Gleitlager 2, so werden die Absperrelemente 5.1, 5.2 durch den Schmiermitteldruck an der Kurbelwelle 1 gehalten und dadurch ein von der Wärmedehnung quasi unabhängiger Drosselspalt erzeugt. Dadurch wird eine extreme Zunahme des Schmiermittelstroms durch das Lager verhindert, da die Absperrelemente 5.1, 5.2 den Schmiermittelstrom drosseln. Ohne Beschränkung der Allgemeinheit ist die oben beschriebene Maßnahme bei der dargestellten Ausführungsform auf die Oberschale 3 des Gleitlagers 2 beschränkt. Eine ausreichende Drosselung des Schmiermittelstroms wird dadurch bereits erreicht. Eine zu starke Drosselung würde die Wärmeabfuhr durch das ausfließende Schmiermittel zu stark reduzieren.

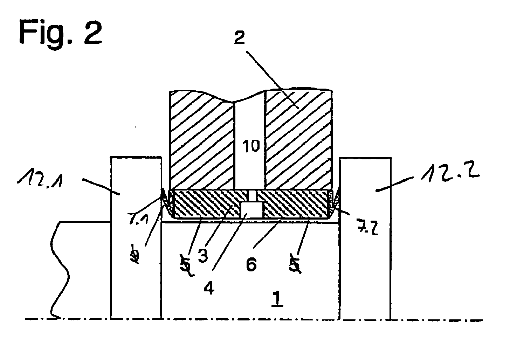

Fig. 2 zeigt analog zu Fig. 1 eine Kurbelwelle 1, die in einem Gleitlager 2 über die Lagerschalen 3 gelagert ist. Die Schmiermittelversorgung des Lagers erfolgt über die Nut 4 in der Lagerschale 3. Zwischen Lagerschale und Kurbelwelle befindet sich der Lagerspalt 6. An den Außenumfangsseiten der Lagerschale 3 sind Dichtelemente mit Dichtlippen 7.1. 7.2 angebracht, die an den Wangen 12.1, 12.2 der Kurbelwelle 1, dichtend anliegen, radial nach außen orientiert sind und als Drossel wirken, indem die Dichtlippen 7.1, 7.2 bei Druckbeaufschlagung abheben können und das Schmiermittel gedrosselt aus dem Lagerspalt 6 entweichen lassen.

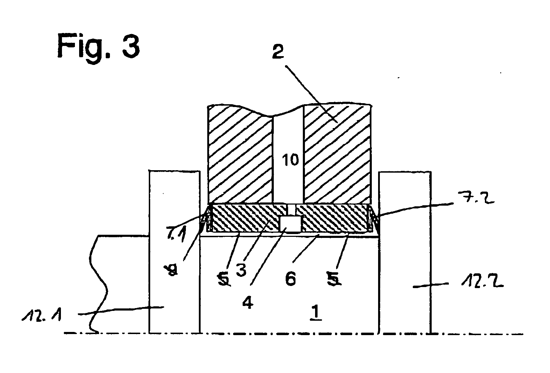

Fig. 3 zeigt eine Anordnung analog zu Fig. 2. Bei dieser Ausführungsform sind jedoch die Dichtlippen 7.1, 7.2 , radial nach innen orientiert, drosseln dadurch besser und leiten dadurch den Schmiermittetstrom in die untere (nicht dargestellte) Lagerschale ab, wo er hydrodynamisch den erforderlichen Gleitlagerspalt bildet und wärmeabführend entweichen kann. Aufgrund des fehlenden Schmiermittelstroms seitlich der oberen Lagerschale 3 ist diese Ausführungsform in erster Linie für die Loslager geeignet und weniger für das Festlager.

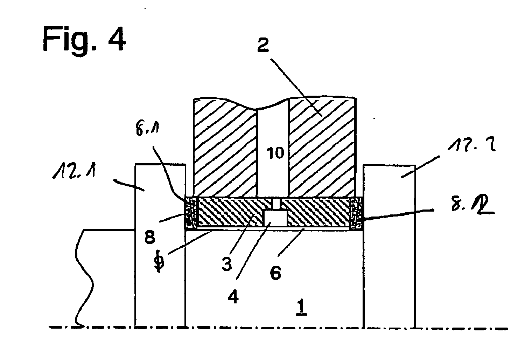

Fig. 4 zeigt eine Kurbelwellen-Gleitlageranordnung analog zu Fig. 3, bei welcher jedoch anstelle von Dichtlippen an dem Außenumfang der oberen Lagerschale 3 und dem Innenumfang der Kurbelwellenwangen 12.1, 12.2 anliegende kreisringförmige Scheiben 8 mit Drosselbohrungen 8.1, 8.2 als Drosselelemente vorgesehen sind. Der Schmiermittelstrom kann bei dieser Ausführungsform das Gleitlager nur seitlich durch die Bohrungen gedrosselt verlassen.

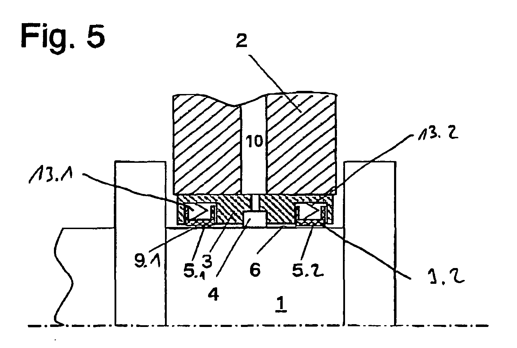

Fig. 5 zeigt eine Ausführung der Erfindung entsprechend Fig. 1 mit dem Unterschied, dass die Drosselelemente 5.1, 5.2 auf beiden Seiten mit Federn 13.1, 13.2 radial an die Kurbelwelle 1 angepresst werden. Der Vorteil dieser Ausführung besteht in der schmiermitteldruckunabhängigen Drosselung des Schmiermittelstromes mit gleichbleibendem Anpressdruck der Drosselelemente 5.1, 5.2 auf die Kurbelwelle 1.

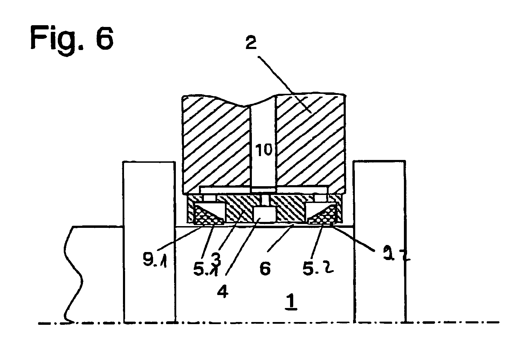

Fig. 6 zeigt eine Ausführung der Erfindung entsprechend Fig. 1 mit dem Unterschied, dass die Drosselelemente 5.1, 5.2 in Dreiecksform ausgeführt sind und bei Schmiermitteldruckbeaufschlagung axial nach außen gedrückt werden. Hierbei kann das Schmiermittel nach innen in den Lagerspalt 6 entweichen und es kann ggf. auf die mittlere Nut 4 zur Schmiertnittelversorgung verzichtet werden.

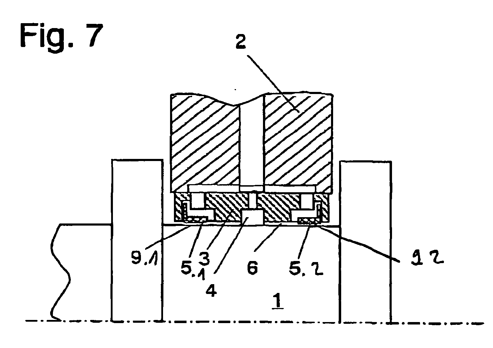

Fig. 7 zeigt eine Ausführung der Erfindung entsprechend Fig. 1 mit dem Unterschied, dass die Drosselelemente 5.1, 5.2 in L-Form ausgeführt sind. Mittels Führungsnuten wird die Lage der Drosselelemente 5.1, 5.2 in den Aufnahmenuten 3.1, 3.2 axial bestimmt. Diese legen sich bei Beaufschlagung mit Schmiermiteldruck radial an die Kurbelwelle und axial and die axial außenliegenden Wände der Aufnahmenuten 3.1, 3,2 an. Hierbei kann wie bei der in Fig. 6 dargestellten Ausführungsform das Schmiermittel nach innen in den Lagerspalt 6 entweichen, wodurch ggf. auf die mittlere Nut 4 zur Schmiermittelversorgung verzichtet werden kann.

## Patentansprüche

1. Gleitlager zur Lagerung einer Welle (1), umfassend wenigstens eine Lagerschale (3) zur Aufnahme der Welle (1), wobei die Lagerschale (3) und die Oberfläche der Welle (1) einen Lagerspalt (6) definieren, sowie Mittel zum Zuführen eines Schmiermittels in den Lagerspalt (6), welches aus dem Lagerspalt (6) wieder abführbar ist, wobei wenigstens ein Drosselelement zur Drosselung des Schmiermittelstroms durch den Lagerspalt (6) vorgesehen ist, **dadurch gekennzeichnet, dass** die Drosselelemente Absperrelemente (5.1, 5.2), die durch Federelemente (13.1, 13.2) und/oder ein unter Druck stehendes Fluid an die Welle (1) anlegbar sind, umfassen.

2. Gleitlager nach Anspruch 1, **dadurch gekennzeichnet, dass** die Drosselelemente im Bereich der der Welle (1) zugewandten Seite und/oder der Stirnseiten der. Lagerschale (3) angeordnet sind.

3. Gleitlager nach Anspruch 2, **dadurch gekennzeichnet, dass** die Drosselelemente an und/oder in der Lagerschale (3) angeordnet sind.

4. Gleitlager nach einem der Ansprüche 1 bis 3, **dadurch gekennzeichnet, dass** die Drosselelemente am Außenumfang der Lagerschale (3) angeordnete Ringscheiben (8) umfassen, die mit Drosselöffnungen (8.1) für den Durchtritt des Schmiermittels versehen sind.

5. Gleitlager nach einem der Ansprüche 1 bis 4, **dadurch gekennzeichnet, dass** die Drosselelemente Dichtlippen (7.1, 7.2) umfassen.

6. Gleitlager nach einem der Ansprüche 1 bis 5, **dadurch gekennzeichnet, dass** wenigstens zwei Absperrelemente (5.1, 5.2) in und/oder an der Lagerschale (3) auf der der Welle (1) zugewandten Seite beiderseits der Nut (4) zum Zuführen des Schmiermittelstroms angeordnet sind.

7. Gleitlager nach einem der Ansprüche 1 bis 6, **dadurch gekennzeichnet, dass** die Absperrelemente (5.1, 5.2) in Nuten (3.1, 3.2) in der Lagerschale (3) auf der der Welle (1) zugewandten Seite angeordnet sind.

8. Gleitlager nach Anspruch 7, **dadurch gekennzeichnet, dass** die Absperrelemente (5.1, 5.2) in den Nuten (3.1, 3.2) axial und/oder radial beweglich angeordnet sind.

9. Gleitlager nach Anspruch 8, **dadurch gekennzeichnet, dass** in den Nuten (3.1, 3.2) zur Aufnahme der Absperrelemente (5.1, 5.2) Federelemente (13.1, 13.2) zur Anfederung der Absperrelemente (5.1, 5.2) vorgesehen sind.

10. Gleitlager nach Anspruch 8 oder 9, dass Absperrelemente (5.1, 5.2) in den Nuten (3.1, 3.2) mit Fluiddruck beaufschlagbar sind.

11. Gleitlager nach Anspruch 10, **dadurch gekennzeichnet, dass** die Nuten (3.1, 3.2) zur Aufnahme der Absperrelemente (5.1, 5.2) mit dem Schmiermitteldruck beaufschlagbar sind.

12. Gleitlager nach Anspruch 11, **dadurch gekennzeichnet, dass** die Absperrelemente (5.1, 5.2) so gestaltet sind, dass der Schmiermittelfluss aus den Aufnahmenuten (3.1, 3.2) heraus zur Lagerschalenmitte hin gelenkt wird.

13. Gleitlager nach Anspruch 12, **dadurch gekennzeichnet, dass** die Absperrelemente (5.1, 5.2) einen Dreiecks- oder L-förmigen Querschnitt aufweisen.

## Claims

1. Sliding bearing for mounting a shaft (1), comprising at least one bearing shell (3) for holding the shaft (1), with the bearing shell (3) and the surface of the shaft (1) defining a bearing gap (6), and means for supplying a lubricant into the bearing gap (6), which lubricant can be discharged out of the bearing gap (6) again, with at least one throttle element being provided for throttling the lubricant flow through the bearing gap (6), **characterized in that** the throttle elements comprise shut-off elements (5.1, 5.2) which can be pressed against the shaft (1) by spring elements (13.1, 13.2) and/or by a pressurized fluid.

2. Sliding bearing according to Claim 1, **characterized in that** the throttle elements are arranged in the region of that side of the bearing shell (3) which faces toward the shaft (1) and/or in the region of the end sides of the bearing shell (3).

3. Sliding bearing according to Claim 2, **characterized in that** the throttle elements are arranged on and/or in the bearing shell (3).

4. Sliding bearing according to one of Claims 1 to 3, **characterized in that** the throttle elements comprise annular discs (8) which are provided with throttle openings (8.1) for the passage of the lubricant.

5. Sliding bearing according to one of Claims 1 to 4, **characterized in that** the throttle elements comprise sealing lips (7.1, 7.2).

6. Sliding bearing according to one of Claims 1 to 5, **characterized in that** at least two shut-off elements (5.1, 5.2) are arranged in and/or on the bearing shell (3) on the side facing towards the shaft (1) at both sides of the groove (4) for the supply of the lubricant flow.

7. Sliding bearing according to one of Claims 1 to 6, **characterized in that** the shut-off elements (5.1, 5.2) are arranged in grooves (3.1, 3.2) in the bearing shell (3) on the side facing towards the shaft (1).

8. Sliding bearing according to Claim 7, **characterized in that** the shut-off elements (5.1, 5.2) are arranged in an axially and/or radially movable fashion in the grooves (3.1, 3.2).

9. Sliding bearing according to Claim 8, **characterized in that** spring elements (13.1, 13.2) for the spring-loading of the shut-off elements (5.1, 5.2) are provided in the grooves (3.1, 3.2) for holding the shut-off elements (5.1, 5.2).

10. Sliding bearing according to Claim 8 or 9, **characterized in that** shut-off elements (5.1, 5.2) in the grooves (3.1, 3.2) can be acted on with fluid pressure.

11. Sliding bearing according to Claim 10, **characterized in that** the grooves (3.1, 3.2) for holding the shut-off elements (5.1, 5.2) can be acted on with the lubricant pressure.

12. Sliding bearing according to Claim 11, **characterized in that** the shut-off elements (5.1, 5.2) are designed such that the lubricant flow is deflected out of the holding grooves (3.1, 3.2) in the direction of the centre of the bearing shell.

13. Sliding bearing according to Claim 12, **characterized in that** the shut-off elements (5.1, 5.2) have a triangular or L-shaped cross section.

## Revendications

1. Palier lisse pour supporter un arbre (1), comprenant au moins une coque de palier (3) pour recevoir l'arbre (1), la coque de palier (3) et la surface de l'arbre (1) définissant un interstice de palier (6), ainsi que des moyens pour acheminer un lubrifiant dans l'interstice de palier (6), qui peut être à nouveau évacué de l'interstice de palier (6), au moins un élément d'étranglement pour l'étranglement du flux de lubrifiant à travers l'interstice de palier (6) étant prévu, **caractérisé en ce que** les éléments d'étranglement comprennent des éléments de blocage (5.1, 5.2), qui peuvent être appliqués contre l'arbre (1) par des éléments de ressort (13.1, 13.2) et/ou un fluide sous pression.

2. Palier lisse selon la revendication 1, **caractérisé en ce que** les éléments d'étranglement sont disposés dans la région du côté tourné vers l'arbre (1) et/ou des côtés frontaux de la coque de palier (3).

3. Palier lisse selon la revendication 2, **caractérisé en ce que** les éléments d'étranglement sont disposés sur et/ou dans la coque de palier (3).

4. Palier lisse selon l'une quelconque des revendications 1 à 3, **caractérisé en ce que** les éléments d'étranglement présentent des disques annulaires (8) disposés sur la périphérie extérieure de la coque de palier (3), qui sont pourvus d'ouvertures d'étranglement (8.1) pour le passage du lubrifiant.

5. Palier lisse selon l'une quelconque des revendications 1 à 4, **caractérisé en ce que** les éléments d'étranglement comprennent des lèvres d'étanchéité (7.1, 7.2).

6. Palier lisse selon l'une quelconque des revendications 1 à 5, **caractérisé en ce qu'**au moins deux éléments de blocage (5.1, 5.2) sont disposés dans et/ou sur la coque de palier (3) du côté tourné vers l'arbre (1) de part et d'autre de la rainure (4) pour acheminer le flux de lubrifiant.

7. Palier lisse selon l'une quelconque des revendications 1 à 6, **caractérisé en ce que** les éléments de blocage (5.1, 5.2) sont disposés dans des rainures (3.1, 3.2) dans la coque de palier (3) du côté tourné vers l'arbre (1).

8. Palier lisse selon la revendication 7, **caractérisé en ce que** les éléments de blocage (5.1, 5.2) sont disposés de manière déplaçable axialement et/ou radialement dans les rainures (3.1, 3.2).

9. Palier lisse selon la revendication 8, **caractérisé en ce que** des éléments de ressort (13.1, 13.2) pour la suspension à ressort des éléments de blocage (5.1, 5.2) sont prévus dans les rainures (3.1, 3.2) pour recevoir les éléments de blocage (5.1, 5.2).

10. Palier lisse selon la revendication 8 ou 9, **caractérisé en ce que** des éléments de blocage (5.1, 5.2) peuvent être sollicités dans les rainures (3.1, 3.2) par une pression de fluide.

11. Palier lisse selon la revendication 10, **caractérisé en ce que** les rainures (3.1, 3.2) pour recevoir les éléments de blocage (5.1, 5.2) peuvent être sollicitées par la pression de lubrifiant.

12. Palier lisse selon la revendication 11, **caractérisé en ce que** les éléments de blocage (5.1, 5.2) sont configurés de telle sorte que le flux de lubrifiant soit orienté hors des rainures de réception (3.1, 3.2) vers le milieu de la coque de palier.

13. Palier lisse selon la revendication 12, **caractérisé en ce que** les éléments de blocage (5.1, 5.2) présentent une section transversale en forme de triangle ou de L.
